# EUROPÄISCHE PATENTSCHRIFT

(11) **EP 1 249 291 B1**
(45) Veröffentlichungstag und Bekanntmachung des Hinweises auf die Patenterteilung: **15.03.2006**
(21) Anmeldenummer: 02405253.2
(22) Anmeldetag: 02.04.2002
(51) Int. Cl.: B25H 1/00, B23Q 17/22, B23Q 17/24, B23B 49/00, G01B 11/22, B27C 3/08, B23Q 11/00

(54) **Positionierhilfe für Handwerkzeuggerät**
Positioning device for hand tool
Dispositif de positionnement pour outil à main

(30) Priorität: 10.04.2001 DE 10117953
(43) Veröffentlichungstag der Anmeldung: 16.10.2002
(73) Patentinhaber: HILTI Aktiengesellschaft, 9494 Schaan (LI)
(72) Erfinder: Würsch, Christoph, 9470 Werdenberg (CH); Schaer, Roland, 9472 Grabs (CH); Dass, Klaus, 9468 Sax (CH)
(74) Vertreter: Wildi, Roland

(56) Entgegenhaltungen:
- DE-A- 2 838 968
- DE-A- 4 218 982
- DE-A- 4 336 730
- US-A- 5 062 747

## Beschreibung

Die Erfindung bezeichnet eine Positionierhilfe und ein Handwerkzeuggerät gemäß dem Oberbegriff des Anspruchs 1. Eine solche Positionierhilfe mit Handwerkzeuggerät ist aus der DE-A- 2 838 968 bekannt.

Bei Routinearbeiten, insbesondere im Baugewerbe, weist der Ansetzort des Werkzeugs bei einer Folge von einzelnen Arbeitsvorgängen oftmals einen absolut oder inkrementell vorbestimmten, zur Arbeitsrichtung seitlichen, lateralen Abstand zu einem Referenzobjekt auf, wie bspw. eine parallel zur Arbeitsrichtung verlaufende Wand, Kante, Decke, Boden oder einem beliebigen Bauteil. In derartigen Fällen wird entweder jeder dieser Ansetzorte zumeist in einem vorbereitenden Arbeitsschritt durch den Nutzer markiert oder zwischen jedem Arbeitsschritt vom Nutzer ein temporäres Hilfsmass, bspw. eine Messlatte, hinzugenommen und als Positionierhilfe des Handwerkzeuggerätes verwendet.

Nach der US4984371 dient eine, als Spiegelvisier ausgeführte, passive optische Positionierhilfe an einer Kettensäge als Handwerkzeuggerät in Verbindung mit der Visierlinie des Nutzers als integrierte Positionierhilfe zum Ansetzen des Handwerkzeuggerätes in einem vorgegebenen lateralen Abstand zu einer Kante.

Nach der DE2838968 weist ein Bohrhammer einen elektronischen Tiefenanschlag mit einem Ultraschallechoverfahren, einem Hochfrequenzradar oder einem, in Triangulationstechnik verwendeten, optischen Laser als Entfernungsmesssystem parallel zur Arbeitsrichtung auf.

Nach der US4683493 ist ein Fräswerkzeug mit einem lateral strahlenden, als Lichtquelle für ein passives, bildgebendes Verfahren dienenden, optisch aufgeweiteten Laser bestückt.

Des weiteren ist nach der US4893025 ein Sensorsystem einer Roboterhand mit einer Vielzahl von optischen Entfernungsmesssystemen zur Positionsbestimmung ausgestattet.

Nach der DE19836812 ist zudem bei einem Handlaserentfemungsmessgerät mit einem modulierten optischen Laser als Entfernungsmesssystem, aus mehreren, verschiedenen winkelorientierten Einzelmessungen über Rechenalgorithmen die kürzeste Entfernung zu einer Fläche bestimmbar.

Die Aufgabe der Erfindung besteht in der Realisierung eines Handwerkzeuggeräts mit Positionierhilfe für laterale vorbestimmte Ansetzorte des Werkzeugs.

Die Aufgabe wird im wesentlichen durch die Merkmale des Anspruchs 1 gelöst. Vorteilhafte Weiterbildungen ergeben sich aus den Unteransprüchen.

Im wesentlichen weist eine, an einem, in einer Arbeitsrichtung ein Werkzeug vortreibendes, Handwerkzeuggerät befestigbare, Positionierhilfe zumindest ein berührungsloses Entfernungsmesssystem mit einem Entfemungsmesssensor zur Messung der Entfernung vom Entfernungsmesssensor zu einem zumindest diffus reflektierenden Objekt entlang einer Messrichtung und mit einer Recheneinheit zum Vergleich des Messwertes mit einem vorwählbaren Sollwert sowie zur Erzeugung einer vom Vergleich abhängigen Signalisierung auf, wobei die Messrichtung senkrecht zur Arbeitsrichtung orientiert ist.

Durch die senkrecht zur Arbeitsrichtung orientierte Messrichtung der Entfernungsmessung mit üblichen berührungslosen Verfahren ist die Messrichtung unabhängig vom Vortrieb des Handwerkzeuggerätes stets innerhalb der zur Arbeitsrichtung senkrechten, und somit üblicherweise die Oberfläche des Werkstücks bildenden, Ebene gelegen, in welcher üblicherweise ein lateraler Sollwert als Sollabstand vorgegeben ist. Der Sollwert wird über übliche Eingabemittel wie Tasten eingegeben und die Signalisierung schaltet übliche Ausgabemittel wie Piepser, Leuchtdioden oder numerische Displays. Durch eine Drehung des Handwerkzeuggerätes gemeinsam mit der drehfest befestigbaren Positionierhilfe oder der drehversetzbaren Positionierhilfe allein relativ zum Handwerkzeuggerät um die Arbeitsrichtung kann innerhalb dieser Ebene die Messrichtung ausgewählt oder vorgewählt werden.

Vorteilhaft ist die Positionierhilfe modular mit dem Handwerkzeuggerät kombinierbar ausgeführt, vorzugsweise mit einem standardisierten Zusatzhandgriff oder dem Saugkopf einer Staubabsaugung verbunden, wodurch die Positionierhilfe bei Bedarf einfach und schnell am Handwerkzeuggerät montierbar und demontierbar ist.

Vorteilhaft ist zumindest der Entfernungsmesssensor oder ein, das Messsignal in die laterale Messrichtung umlenkendes, Umlenkmittel wie ein geneigter Spiegel längs der Arbeitsrichtung nahe benachbart zur Werkzeugspitze angeordnet, wodurch beim Ansetzen des Handwerkzeuggerätes ein Winkelfehler der Arbeitsrichtung zum Lot der Werkstückoberfläche nur einen minimierten lateralen Fehler des Messwertes verursacht.

Weiter vorteilhaft ist der Entfernungsmesssensor und/oder das Umlenkmittel axial vorgespannt beweglich befestigt, wodurch es beim Ansetzen des Handwerkzeuggerätes mit der Werkstückoberfläche in Kontakt steht und somit nähestmöglich zu dieser angeordnet ist, sowie den Vortrieb des Werkzeuges nicht behindert.

Vorteilhaft ist der Entfernungsmesssensor und/oder das Umlenkmittel bezüglich der Arbeitsrichtung frei drehbar und weist diesbezüglich ein unsymmetrisch verteiltes Gewicht auf, wodurch bei einer von der Schwererichtung abweichenden, bspw. horizontalen, Arbeitsrichtung eine passive selbsttätige Vorzugsorientierung der Messrichtung gegeben ist. Bei einer weiter vorteilhaften aktiven Vorzugsorientierung der Messrichtung dient die vorteilhaft mit Beschleunigungssensoren erfassbare Richtung der Schwerkraft über eine Recheneinheit zur elektrischen Ansteuerung schwenkbarer Umlenkmittel.

Alternativ vorteilhaft ist der Entfernungsmesssensor und/oder das Umlenkmittel zumindest in einer Dimension um 90° schwenkrastbar ausgeführt, wodurch die Messrichtung entweder innerhalb der Ebene senkrecht zur Arbeitsrichtung oder parallel zu dieser vorwählbar ist, wobei im letzteren Fall die Positionierhilfe als Tiefenanschlag dient.

Alternativ vorteilhaft ist der Entfernungsmesssensor und/oder das Umlenkmittel mit einem elektromechanischen oder mikromechanischen Ablenkmittel bezüglich der Messrichtung zumindest in einer Dimension in einem Scanbereich schwingend ausgeführt und die Recheneinheit mit einem Rechenalgorithmus zur Bestimmung eines extremalen Abstands innerhalb der Schwingungsperiode ausgeführt, wodurch innerhalb des Scanbereiches die Messrichtung entweder lotrecht zu einer Fläche oder zu einer nächstliegenden Kante eines Bauteils oder zu einer entferntest liegenden Ecke selbsttätig gegeben ist. Im Fall eines Laserstrahls ist das Ablenkmittel weiter vorteilhaft jeweils als rotierender Spiegel, Prisma, Glasfaser oder Laserdiode ausgebildet.

Vorteilhaft sind zumindest der Entfernungsmesssensor und/oder das Umlenkmittel zweifach oder dreifach vorhanden und bezüglich der Messrichtung zu 90° zueinander orientiert, wodurch gleichzeitig zwei oder drei unabhängige Messrichtungen, bspw. die laterale Positionierung und die Tiefe, erfassbar sind.

Vorteilhaft weist die Positionierhilfe netzunabhängige Akkumulatoren oder vom magnetischen Wechselfeld des Handwerkzeuggerätes durchsetzte Induktionsspulen als Stromquellen auf, wodurch ein Stromversorgungskabel zum Handwerkzeuggerät entfällt.

Vorteilhaft ist über eine einzige Übernahmetaste der aktuelle Messwert als Sollwert in ein Speichermittel der Positionierhilfe übernehmbar, wodurch eine sehr einfache und zuverlässige Eingabe auch im rauhen Umfeld des Baugewerbes möglich ist.

Vorteilhaft ist die Signalisierung steuerbar mit einem Steuermittel des Handwerkzeuggerätes verbunden, welches schaltbar optional die zweckentsprechende Aktivierung des Handwerkzeuggerätes nur ermöglicht, wenn der Messwert in einem, optional vorwählbaren, Toleranzbereich von bspw. +/- 1 cm des Sollwertes liegt, wodurch bspw. bei Bolzensetzgeräten die Einhaltung eines Mindestabstandes zwischen gesetzten Bolzen erreicht werden kann.

Vorteilhaft ist der Entfernungsmesssensor ein optisch aktiver Sensor mit einem optisch sichtbaren Laserstrahl, welcher moduliert als Phasen- oder Pulslaufzeitmesser oder unmoduliert im Triangulationsverfahren betrieben wird, wodurch die laterale Messrichtung direkt für den Nutzer sichtbar ist.

Die Erfindung wird bezüglich eines vorteilhaften Ausführungsbeispiels näher erläutert mit:
Fig. 1 als Positionierhilfe für ein Handwerkzeuggerät
Fig. 2 als Positionierhilfe als Teil des Zusatzhandgriffs für einen Bohrhammer
Fig. 3 als Positionierhilfe als Teil der Staubabsaugung für einen Bohrhammer
Fig. 4 als Positionierhilfe für ein Bolzensetzgerät

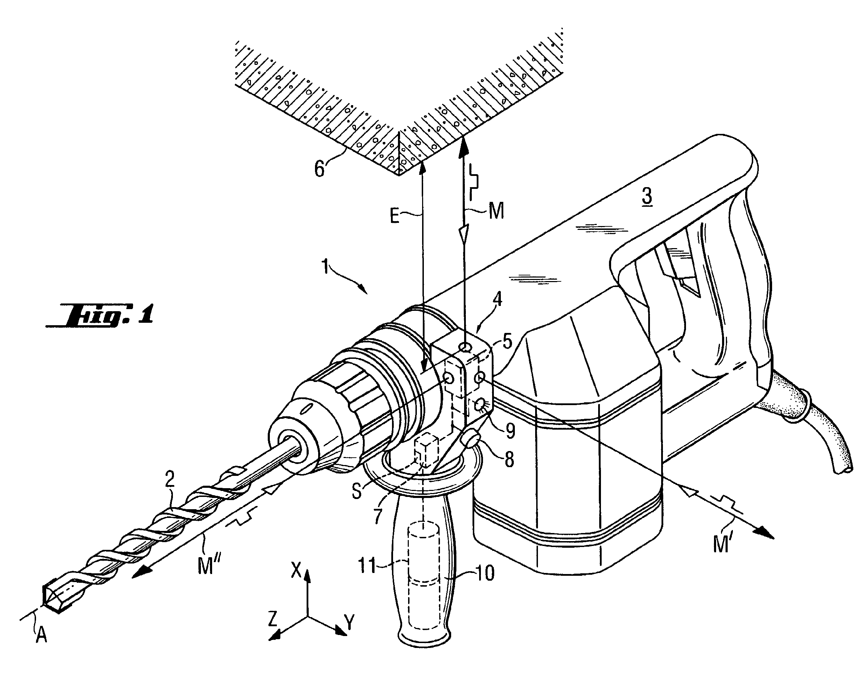

Nach Fig. 1 weist eine Positionierhilfe 1, welche an einem, in einer Arbeitsrichtung A ein Werkzeug 2 vortreibendens, Handwerkzeuggerät 3 befestigt ist, ein pulslaufzeitbasiertes laseroptisches Entfernungsmesssystem 4 mit einem, drei Laserdioden aufweisenden, Entfernungsmesssensor 5 zur Messung der Entfernung E vom Entfernungsmesssensor 5 zu einem reflektierenden Objekt 6 entlang dreier, jeweils zueinander senkrechter Messrichtungen M, M', M" in der Art eines in den Symmetrieachsen X,Y,Z des Handwerkzeuggerätes 3 orientierten Dreibeins und mit einer Recheneinheit 7 mit einem gespeicherten Sollwert S auf, wobei die Recheneinheit 7 mit dem Entfernungsmesssensor 5, mit einer einzigen Übernahmetaste als Eingabemittel 8 und mit Leuchtdioden als Ausgabemittel 9 signalübertragend verbunden ist. Bei einer parallel zur Arbeitsrichtung A orientierten Messrichtung M" ist das Entfernungsmesssystems 4 ein elektronischer Tiefenanschlag. Die Positionierhilfe 1 ist mit einem Zusatzhandgriff 10 verbunden und dieserart standardisiert modular mit dem Handwerkzeuggerät 1 kombinierbar. Im Zusatzhandgriff 10 ist ein Akkumulator 11 angeordnet, welcher mit der Recheneinheit 7 verbunden ist.

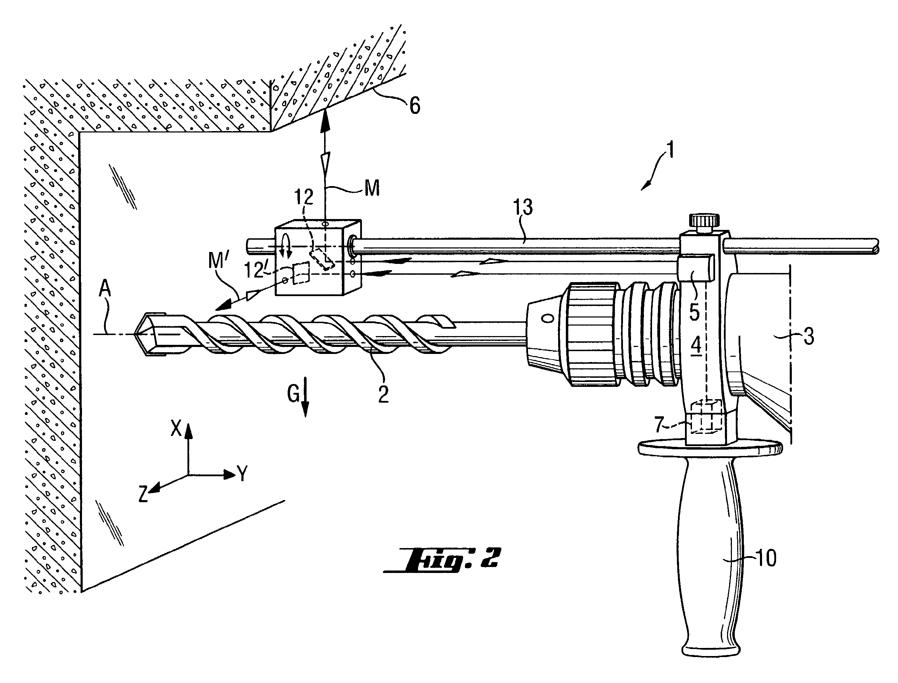

Nach Fig. 2 sind als Positionierhilfe 1 für ein Handwerkzeuggerät 3 bei einem Zusatzhandgriff 10 am Handwerkzeuggerät 3 mit einem laseroptischen Entfernungsmesssystem 4 mit einem Entfernungsmesssensor 5 und einer damit verbundenen Recheneinheit 7 zwei miteinander verbundene, um 90° zueinander versetzte, geneigte Spiegel als Umlenkmittel 12, 12' für den sichtbaren Laserstrahl drehfrei auf einem parallel zur Arbeitsrichtung A befestigten mechanischen Tiefenanschlagstab 13 nahe einer Spitze des Werkzeugs 2 angeordnet, wobei über das unsymmetrisch verteilte Gewicht der Umlenkmittel 12, 12' durch die Schwerkraft G selbständig die Messrichtungen M, M' vertikal nach oben zur Decke als Objekt 6 sowie in der Art eines Dreibeins senkrecht zu diesem und zur Arbeitsrichtung A orientiert sind.

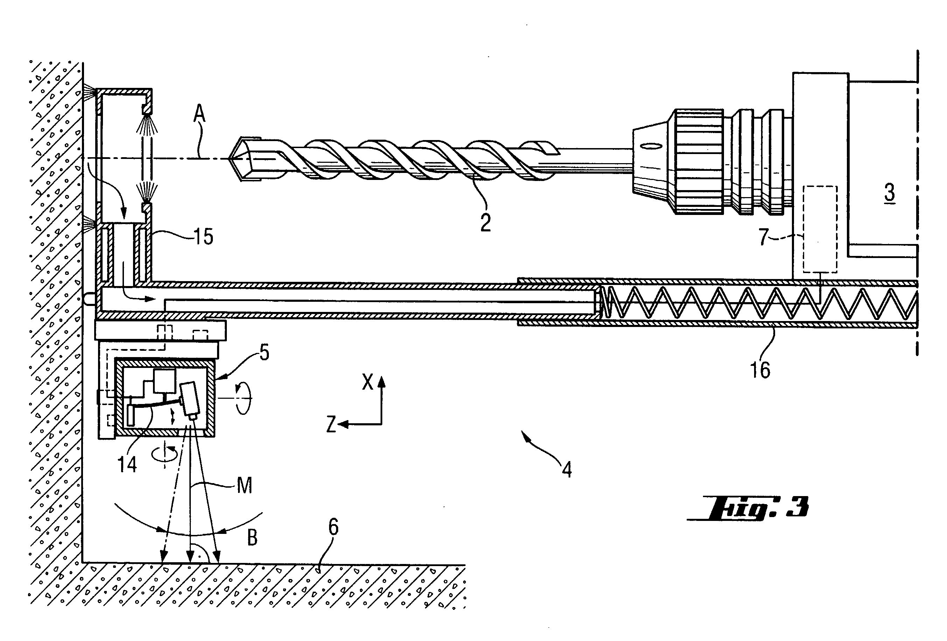

Nach Fig. 3 ist ein Entfernungsmesssensor 5 des Entfernungsmesssystems 4 mit einer, durch einen elektromechanischen Kragarm als Auslenkmittel 14 schwingend einen Scanbereich B abtastenden, Laserdiode an einem, an der Werkstückoberfläche anliegenden, Saugkopf 15 einer axial federnd vorgespannt beweglichen Staubabsaugung 16 eines Handwerkzeuggerätes 3 befestigt sowie in zwei Ebenen um jeweils 90° schwenkrastbar zur Arbeitsrichtung A ausgeführt, wodurch innerhalb des gewählten Scanbereiches B die Messrichtung M lotrecht zu einer Seitenfläche als Objekt 6 über den kleinsten Messwert bestimmt ist, welchen die Recheneinheit 7 ermittelt.

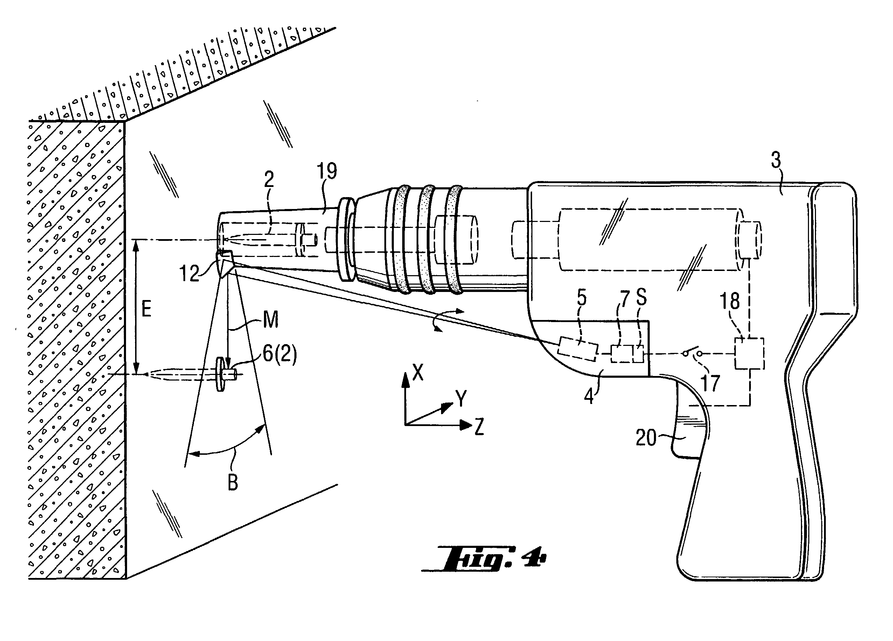

Nach Fig. 4 weist ein Bolzensetzgerät als Handwerkzeuggerät 3 für einen zu setzenden Bolzen als verlorenes Werkzeug 2 ein laseroptisches Entfernungsmesssystem 4 mit einer Recheneinheit 7 auf, dessen Signalisierung über einen Schalter 17 steuerbar mit einem Steuermittel 18 des Handwerkzeuggerätes 3 verbunden ist. Der über einen Scanbereich B versetzt drehschwingend, winkelig ausgelenkte, infrarote Laserstrahl trifft auf eine, an einer Bolzenführung 19 angeordnete, kegelstumpfförmige Spiegelfläche als Umlenkmittel 12 und scannt den gesamten Halbraum lateral zur Arbeitsrichtung A ab. Der von der Recheneinheit 7 detektierbare minimale Messwert der Messrichtung M ist die Entfernung E zu einem benachbarten, bereits gesetzten Bolzen als Objekt 6 zugeordnet. Über den, in der Recheneinheit 7 gespeicherten, Sollwert S ist ein Mindestabstand der Bolzen definiert, unter welchem über das Steuermittel 18 die Aktivierung des Handwerkzeuges 3 durch einen Auslöseschalter 20 gesperrt ist.

## Patentansprüche

1. Positionierhilfe (1) und Handwerkzeuggerät (3), wobei das Handwerkzeuggerät in einer Arbeitsrichtung (A) ein Werkzeug (2) vortreibt, und wobei die Positionnerhilfe ein an dem Handwerkzeuggerät befestigtes berührungsloses Entfernungsmesssystem (4) mit zumindest einem Entfernungsmesssensor (5) zur Messung der Entfernung vom Entfernungsmesssensor (5) zu einem Objekt (6) entlang einer Messrichtung (M, M', M") und mit einer Recheneinheit (7) zum Vergleich des Messwertes mit einem vorwählbaren Sollwert (S) sowie zur Erzeugung einer vom Vergleich abhängigen Signalisierung enthält, **dadurch gekennzeichnet, dass** die Messrichtung (M, M') zumindest teilweise senkrecht zur Arbeitsrichtung (A) orientiert ist.

2. Positionierhilfe (1) und Handwerkzeuggerät (3) nach Anspruch 1, **dadurch gekennzeichnet, dass** die Positionierhilfe modular mit dem Handwerkzeuggerät (3) kombinierbar ausgeführt ist, und optional mit einem Zusatzhandgriff (10) oder einer Staubabsaugung (16) verbunden ist.

3. Positionierhitfe (1) und Handwerkzeuggerät (3) nach Anspruch 1 oder Anspruch 2, **dadurch gekennzeichnet, dass** zumindest ein Entfernungsmesssensor (5) und/oder ein Umlenkmittel (12, 12') längs der Arbeitsrichtung (A) nahe benachbart zur Werkzeugspitze (13) angeordnet ist.

4. Positionierhilfe (1) und Handwerkzeuggerät (3) nach einem der vorherigen Ansprüche, **dadurch gekennzeichnet, dass** zumindest ein Entfernungsmesssensor (5) und/oder ein Umlenkmittel (12, 12') axial vorgespannt beweglich befestigt ist.

5. Positionierhilfe (1) und Handwerkzeuggerät (3) nach einem der vorherigen Ansprüche, **dadurch gekennzeichnet, dass** zumindest ein Entfernungsmesssensor (5) und/oder ein Umlenkmittel (12,12') bezüglich der Arbeitsrichtung (A) entweder frei drehbar ist und diesbezüglich ein unsymmetrisch verteiltes Gewicht aufweist oder aktiv durch eine mit Beschleunigungssensoren verbundene Recheneinheit (7) schwenkbar ist.

6. Positionierhilfe (1) und Handwerkzeuggerät (3) nach einem der Ansprüche 1 bis 4, **dadurch gekennzeichnet, dass** zumindest ein Entfernungsmesssensor (5) und/oder ein Umlenkmittel (12, 12') zumindest in einer Dimension um 90° schwenkrastbar ausgeführt ist.

7. Positionierhilfe (1) und Handwerkzeuggerät (3) nach einem der Ansprüche 1 bis 4, **dadurch gekennzeichnet, dass** zumindest ein Entfernungsmesssensor (5) und/oder ein Umlenkmittel (12, 12') bezüglich der Messrichtung (M, M', M") zumindest in einer Dimension mit einem Auslenkmittel (14) in einem Scanbereich (B) schwingend ausgeführt ist sowie die Recheneinheit (7) einen Rechenalgorithmus zur Bestimmung eines extremalen Messwertes innerhalb der Schwingungsperiode beinhaltet.

8. Positionierhilfe (1) und Handwerkzeuggerät (3) nach einem der vorherigen Ansprüche, **dadurch gekennzeichnet, dass** zumindest der Entfernungsmesssensor (5) und/oder das Umlenkmittel (12, 12') zweifach oder dreifach vorhanden und bezüglich der Messrichtung (M, M', M") in 90° zueinander orientiert sind.

9. Positionierhilfe (1) und Handwerkzeuggerät (3) nach einem der vorherigen Ansprüche, **dadurch gekennzeichnet, dass** die Positionierhilfe einen netzunabhängigen Akkumulator (11) oder eine vom magnetischen Wechselfeld des Handwerkzeuggerätes durchsetzte Induktionsspule als Stromquelle aufweist.

10. Positionierhilfe (1) und Handwerkzeuggerät (3) nach einem der vorherigen Ansprüche, **dadurch gekennzeichnet, dass** ein einzelnes Eingabemittel (8) vorhanden ist, über welches der aktuelle Messwert als Sollwert (S) in ein Speichermittel übernehmbar ist.

11. Positionierhitfe (1) und Handwerkzeuggerät (3) nach einem der vorherigen Ansprüche, **dadurch gekennzeichnet, dass** die Signalisierung steuerbar mit einem Steuermittel (18) des Handwerkzeuggerätes (3) verbunden ist.

12. Positionierhilfe (1) und Handwerkzeuggerät (3) nach einem der vorherigen Ansprüche, **dadurch gekennzeichnet, dass** der Entfernungsmesssensor (5) ein optisch aktiver Sensor mit einem optisch sichtbaren Laserstrahl ist.

## Claims

1. Positioning aid (1) and hand tool machine (3), the hand tool machine driving a tool (2) in a working direction (A) and the positioning aid comprising a non-contact distance-measuring system (4), which is fixed to the hand tool machine and consists of at least one distance-measuring sensor (5), for measuring the distance from the distance-measuring sensor (5) to an object (6) along a direction of measurement (M, M', M"), and an arithmetic unit (7) for comparing the measured value with a pre-selectable desired value (S) as well as for generating a signalling dependent upon the comparison, **characterized in that** the direction of measurement (M, M') is at least partly oriented perpendicular to the working direction (A).

2. Positioning aid (1) and hand tool machine (3) according to Claim 1, **characterized in that** the positioning aid is designed so that it can be combined in the form of a module with the hand tool machine (3) and is optionally attached to a secondary handle (10) or dust-extraction means (16).

3. Positioning aid (1) and hand tool machine (3) according to Claim 1 or Claim 2, **characterized in that** at least one distance-measuring sensor (5) and/or one deflecting means (12, 12') is disposed along the working direction (A) closely adjacent to the tip (13) of the tool.

4. Positioning aid (1) and hand tool machine (3) according to one of the preceding claims, **characterized in that** at least one distance-measuring sensor (5) and/or one deflecting means (12, 12') is fixed with initial tension so as to be movable in axial direction.

5. Positioning aid (1) and hand tool machine (3) according to one of the preceding claims, **characterized in that** at least one distance-measuring sensor (5) and/or one deflecting means (12, 12') is either freely rotatable relative to the working direction (A), and has an asymmetrically distributed weight relative to the latter, or can be actively swivelled by an arithmetic unit (7) connected to acceleration sensors.

6. Positioning aid (1) and hand tool machine (3) according to one of Claims 1 to 4, **characterized in that** at least one distance-measuring sensor (5) and/or one deflecting means (12, 12') is designed to be swivel-lockable at least in one dimension by 90°.

7. Positioning aid (1) and hand tool machine (3) according to one of Claims 1 to 4, **characterized in that** at least one distance-measuring sensor (5) and/or one deflecting means (12, 12') is designed so as to oscillate relative to the direction of measurement (M, M', M") at least in one dimension with a deflecting means (14) in a scanning range (B), and the arithmetic unit (7) contains a mathematical algorithm for determining an extremal measured value within the period of oscillation.

8. Positioning aid (1) and hand tool machine (3) according to one of the preceding claims, **characterized in that** at least the distance-measuring sensor (5) and/or the deflecting means (12, 12') are provided twofold or threefold and are oriented at an angle of 90° to one another relative to the direction of measurement (M, M', M").

9. Positioning aid (1) and hand tool machine (3) according to one of the preceding claims, **characterized in that** the positioning aid has, as its power source, a mains-independent accumulator (11) or an induction coil passed through by the alternating magnetic field of the hand tool machine.

10. Positioning aid (1) and hand tool machine (3) according to one of the preceding claims, **characterized in that** a single input means (8) is provided, by way of which the actual measured value can be transferred as desired value (S) into a storage means.

11. Positioning aid (1) and hand tool machine (3) according to one of the preceding claims, **characterized in that** the signalling is controllable **in that** it is connected to control means (18) of the hand tool machine (3).

12. Positioning aid (1) and hand tool machine (3) according to one of the preceding claims, **characterized in that** the distance-measuring sensor (5) is an optically active sensor with an optically visible laser beam.

## Revendications

1. Moyen d'aide au positionnement (1) et appareil portatif (3), l'appareil portatif poussant un outil (2) dans une direction de travail (A), et le moyen d'aide au positionnement comprenant un dispositif de mesure d'éloignement sans contact (4), pouvant être monté sans contact sur l'appareil portatif, avec au moins un capteur de mesure d'éloignement (5) pour la mesure de l'éloignement du capteur de mesure d'éloignement (5) par rapport à un objet (6) suivant une direction de mesure (M, M', M"), et comprenant un module de calcul (7) pour comparer la valeur mesurée avec une valeur de consigne présélectionnée (S) ainsi que pour produire une signalisation en fonction de la comparaison, **caractérisé en ce que** la direction de mesure (M, M') est orientée au moins partiellement perpendiculairement à la direction de travail (A).

2. Moyen d'aide au positionnement (1) et appareil portatif (3) selon la revendication 1, **caractérisés en ce que** le moyen d'aide au positionnement est conçu modulaire et combinable avec l'appareil portatif (3) et est relié optionnellement à une poignée supplémentaire (10) ou à un aspirateur de poussière (16).

3. Moyen d'aide au positionnement (1) et appareil portatif (3) selon la revendication 1 ou la revendication 2, **caractérisés en ce qu'**au moins un capteur de mesure d'éloignement (5) et/ou un moyen de déviation (12, 12') peut être disposé à proximité immédiate d'une pointe d'outil (13) le long de la direction de travail (A).

4. Moyen d'aide au positionnement (1) et appareil portatif (3) selon une des revendications précédentes, **caractérisés en ce qu'**au moins un capteur de mesure d'éloignement (5) et/ou un moyen de déviation (12, 12') est fixé de manière mobile avec une précontrainte axiale.

5. Moyen d'aide au positionnement (1) et appareil portatif (3) selon une des revendications précédentes, **caractérisés en ce qu'**au moins un capteur de mesure d'éloignement (5) et/ou un moyen de déviation (12, 12') est monté soit à libre rotation par rapport à la direction de travail (A) et présente à ce titre un poids à répartition asymétrique, soit à pivotement actif par l'intermédiaire d'un module de calcul (7) connecté à des capteurs d'accélération.

6. Moyen d'aide au positionnement (1) et appareil portatif (3) selon une des revendications 1 à 4, **caractérisés en ce qu'**au moins un capteur de mesure d'éloignement (5) et/ou un moyen de déviation (12, 12') est conçu avec une possibilité de pivotement à 90° et d'encliquetage au moins dans une dimension.

7. Moyen d'aide au positionnement (1) et appareil portatif (3) selon une des revendications 1 à 4, **caractérisés en ce qu'**au moins un capteur de mesure d'éloignement (5) et/ou un moyen de déviation (12, 12') est conçu avec une possibilité d'oscillation dans une zone de balayage (B) par rapport à la direction de mesure (M, M', M"), au moins dans une dimension, avec un moyen de déflexion (14), et le module de calcul (7) contient un algorithme de calcul pour déterminer une valeur de mesure extrémale à l'intérieur de la période d'oscillation.

8. Moyen d'aide au positionnement (1) et appareil portatif (3) selon une des revendications précédentes, **caractérisés en ce qu'**au moins le capteur de mesure d'éloignement (5) et/ou le moyen de déviation (12, 12') sont prévus en double ou en triple et sont orientés à 90° les uns par rapport aux autres en référence à la direction de mesure (M, M', M").

9. Moyen d'aide au positionnement (1) et appareil portatif (3) selon une des revendications précédentes, **caractérisés en ce que** le moyen d'aide au positionnement comporte, comme source de courant, un accumulateur (11) indépendant du secteur ou une bobine d'induction pouvant être traversée par le champ magnétique alternatif de l'appareil portatif.

10. Moyen d'aide au positionnement (1) et appareil portatif (3) selon une des revendications précédentes, **caractérisés en ce qu'**il est prévu un seul moyen d'entrée (8) permettant de recueillir la valeur mesurée instantanée en tant que valeur de consigne (S) dans un moyen de mémoire.

11. Moyen d'aide au positionnement (1) et appareil portatif (3) selon une des revendications précédentes, **caractérisés en ce que** la signalisation peut être connectée de manière pilotable à un moyen de commande (18) de l'appareil portatif (3).

12. Moyen d'aide au positionnement (1) et appareil portatif (3) selon une des revendications précédentes, **caractérisés en ce que** le capteur de mesure d'éloignement (5) est un capteur optiquement actif avec un faisceau laser optiquement visible.
